**Europäisches Patentamt**

**European Patent Office**

**Office européen des brevets**

(19)

(11) Numéro de publication: **0 041 444**
**B1**

(12)    ## FASCICULE DE BREVET EUROPEEN

(45) Date de publication du fascicule du brevet:
**29.08.84**

(51) Int. Cl.³: **A 01 D 85/00, A 01 F 15/14**

(21) Numéro de dépôt: **81400842.1**

(22) Date de dépôt: **26.05.81**

(54) **Dispositif de liage pour presses à balles cylindriques.**

(30) Priorité: **29.05.80 FR 8011922**

(43) Date de publication de la demande:
**09.12.81 Bulletin 81/49**

(45) Mention de la délivrance du brevet:
**29.08.84 Bulletin 84/35**

(84) Etats contractants désignés:
**DE FR GB IT**

(56) Documents cités:
**US - A - 4 158 331**
**US - A - 4 167 844**

(73) Titulaire: **JOHN DEERE (Société Anonyme), 8, Quai de la Madeleine, F-45000 Orléans (FR)**

(72) Inventeur: **Viaud, Jean, Chargey-les-Gray, F-70100 Gray (FR)**

(74) Mandataire: **Pruvost, Marc Henri et al, Cabinet ORES 6, Avenue de Messine, F-75008 Paris (FR)**

## Description

La présente invention concerne les presses à balles cylindriques.

Ces presses sont d'un type général bien connu et comprennent des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin ramassés sur le champ au cours de la progression de la presse. Il est usuel, avant le déchargement de la balle cylindrique à partir de la presse, d'assurer son liage.

Cette opération que est réalisée à l'aide d'un lien constitué généralement par une ficelle, est effectuée de façon connue au moyen d'un organe de guidage de la ficelle déplacé transversalement au sens de marche de la presse devant l'orifice d'entrée des produits de récolte à l'intérieur de la chambre de formation de la balle. La ficelle est alors prélevée à une réserve telle qu'une boîte à ficelle prévue sur le châssis ou corps de la presse. Du fait du déplacement transversal de l'organe de guidage, cette ficelle forme autour de la balle, lorsqu'elle est appelée par la rotation de cette dernière, des spires hélicoïdales assurant un liage sur toute la longueur de cette balle.

Il est connu (Brevet US 4 150 614) de réaliser l'organe de guidage de la ficelle sous la forme d'un bras, notamment d'un bras tubulaire, monté à pivotement sur la presse de manière à effectuer, sous l'action de moyens appropriés, un mouvement de balayage transversal en face de l'orifice d'entrée des produits de récolte dans la chambre de formation de la balle.

On comprend toutefois que la vitesse de balayage transversal du bras est limitée, pour pouvoir obtenir autour de la balle un nombre de spires de ficelle de liage suffisant pour éviter toute dispersion des produits de récolte constituant la balle.

Or, il paraît désirable, compte tenu des rendements du matériel actuellement utilisé en agriculture, de réduire les temps morts que représente en fait l'opération de liage de balles cylindriques.

On a proposé à cett effet (Brevet US 4 158 331) de prévoir sur la presse deux bras jumelés montés de façon pivotante, décrivant par leur extrémité libre, lors de leur mouvement de pivotement, des trajectoires se complétant orientées transversalement à la presse, pour le guidage de la ficelle de liage en face de l'orifice d'entrée des produits de récolte. Ces bras sont normalement retenus en position de repos. Ils sont libérés pour l'opération de liage , en parvenant alors par un déplacement rapide dans une position de départ, à partir de laquelle ils sont ramenés positivement par un lent mouvement de pivotement vers leur position de repos pendant le liage de la balle.

Le but de l'invention est d'apporter des perfectionnements à cet agencement connu.

L'invention est matérialisée dans un dispositif de liage pour presses à balles cylindriques, comprenant deux bras jumelés montés de façon pivotante sur la presse et décrivant par leur extrémité libre, lors de leur mouvement de pivotement, des trajectoires orientées transversalement à la presse, pour le guidage de la ficelle de liage en face de l'orifice d'entrée des produits de récolte lesdits bras étant portés par des roues dont le centre constitue le point de pivotement des bras, des moyens, retenant ces bras dans leur position de repos, des moyens élastiques pour amener lesdits bras dans une position de départ par un déplacement rapide, et des éléments d'actionnement reliés à ces roues pour provoquer leur rotation et déplacer les bras guide-ficelle, caractérisé en ce que ces éléments d'actionnement sont constitués par au moins un câble relié, d'une part, à l'une au moins des roues ou poulies portant les bras guide-ficelle et, d'autre part, à un organe de traction, en ce qu'il est prévu un tambour relié cinématiquement à un moyen d'entraînement assurant sa rotation continue, ledit câble étant enroulé autour de ce tambour, et en ce que des moyens provoquant le déplacement de cet organe de traction au début de l'opération de liage pour resserrer les spires de câble autour du tambour en provoquant un effet d'embrayage qui assure ainsi le déplacement positif requis des bras par l'intermédiaire des roues ou poulies. On peut, dans ce cas, prévoir un câble pour chacune des deux roues ou poulies, ou bien solidariser angulairement ces dernières, un seul câble, suffisant alors pour la commande de l'une des roues ou poulies, dont le mouvement est transmis à l'autre roue.

L'organe de traction peut être constitué par exemple par un cylindre dont l'extrémité libre de la tige de piston est reliée au câble ou aux câbles. Ce cylindre est alors relié à une source de fluide sous pression par l'intermédiaire d'au moins une valve établissant la communication requise au début de l'opération de liage pour provoquer le déplacement de la tige de piston et l'effet d'embrayage mentionné ci-avant. Cette valve peut être reliée directement ou indirectement au verrou de retenue des bras guide-ficelle en position de repos.

Pour des raisons de sécurité, on peut prévoir également au moins une autre valve interposée dans le circuit d'alimentation du cylindre et munie d'un élément d'actionnement auquel la (ou les) ficelle de liage est reliée sur son trajet entre la boîte à ficelle et les bras. Ainsi, lorsqu'une traction est exercée sur la (ou une) ficelle par la balle au début du liage cette valve est actionnée pour compléter le circuit d'alimentation du cilyndre.

Dans le cas d'un dispositif comprenant pour chacune des deux ficelles de liage un couteau maintenu normalement dans une condition d'ouverture, il est prévu de préférence pour chaque couteau une tringle ou un élément analogue qui est attaqué par les bras lorsque ceux-ci parviennent dans leur condition de repos, afin de provoquer la fermeture des couteaux pour le sectionnement et la rétention des ficelles.

Suivant une autre particularité, des verrous en forme de crochets sont prévus pour retenir les bras en position de repos. Si les bras sont montés à pivotement sur la presse au voisinage de son axe longitudinal, on peut alors prévoir également un verrou en forme de crochet pour retenir l'un des bras en position de repos, et des éléments de retenue par butée prévus entre les bras, pour s'opposer au pivotement du second bras quand le premier est maintenu en position verrouillée par ce verrou en forme de crochet.

Le ou les verrous en forme de chrochets peuvent alors être reliés à un élément ou peuvent comporter un élément qui peut lui-même être actionné de façon automatique ou manuelle vers la fin de l'opération de formation de la balle dans la presse, pour déverrouiller les bras guide-ficelle.

L'invention concerne encore les presses à balles cylindriques comportant un dispositif de liage tel que spécifié ci-avant.

La description que va suivre, faite en regard des dessins annexés, donnés à titre non limitatif permettra de mieux comprendre l'invention.

La fig. 1 est une vue en perspective d'une presse à balles cylindriques équipée d'un dispositif de liage suivant l'invention.

La fig. 2 est une vue schématique à plus grande échelle d'un dispositif suivant l'invention.

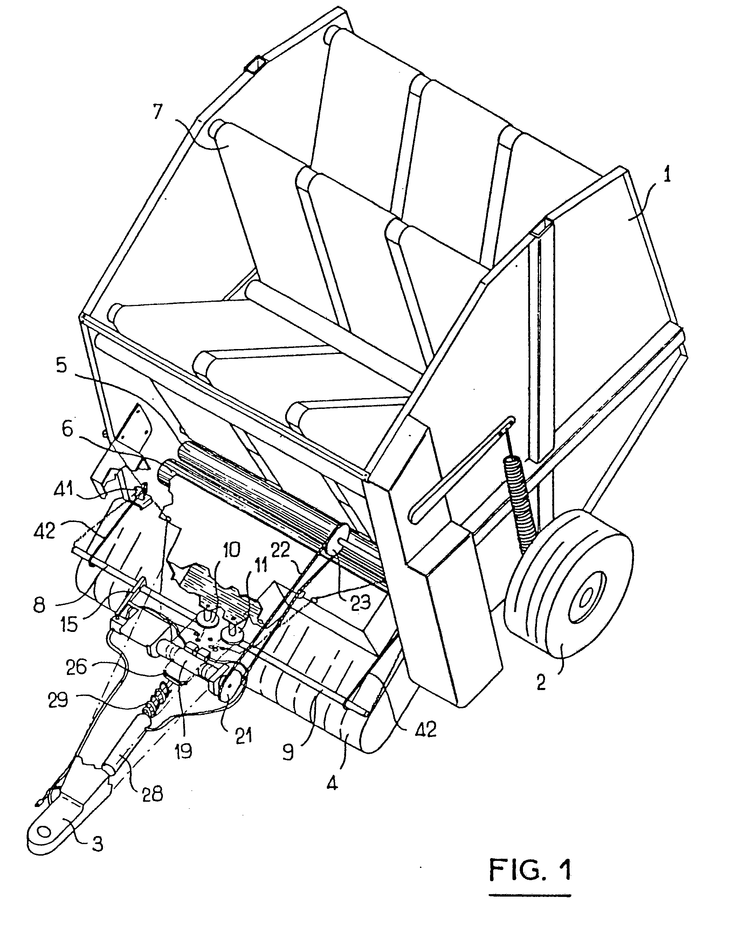

On a représenté sur la fig. 1 une presse à balles cylindriques de type classique, comportant un corps 1 supporté par un châssis équipé de roues 2, la presse étant destinée à être attelée à un tracteur au moyen d'un timon 3. Un ramasseur 4 est prévu de façon classique à la partie avant de la presse, de manière à ramasser les produits de récolte, tels que du fourrage, sur le champ et à les amener à un orifice d'entrée ménagé à la partie avant de la presse, entre des rouleaux 5, 6, en vue de la formation d'une balle par enroulement entre des bandes ou courroies indiquées en 7, tournant dans le sens approprié, d'une manière en soi connue.

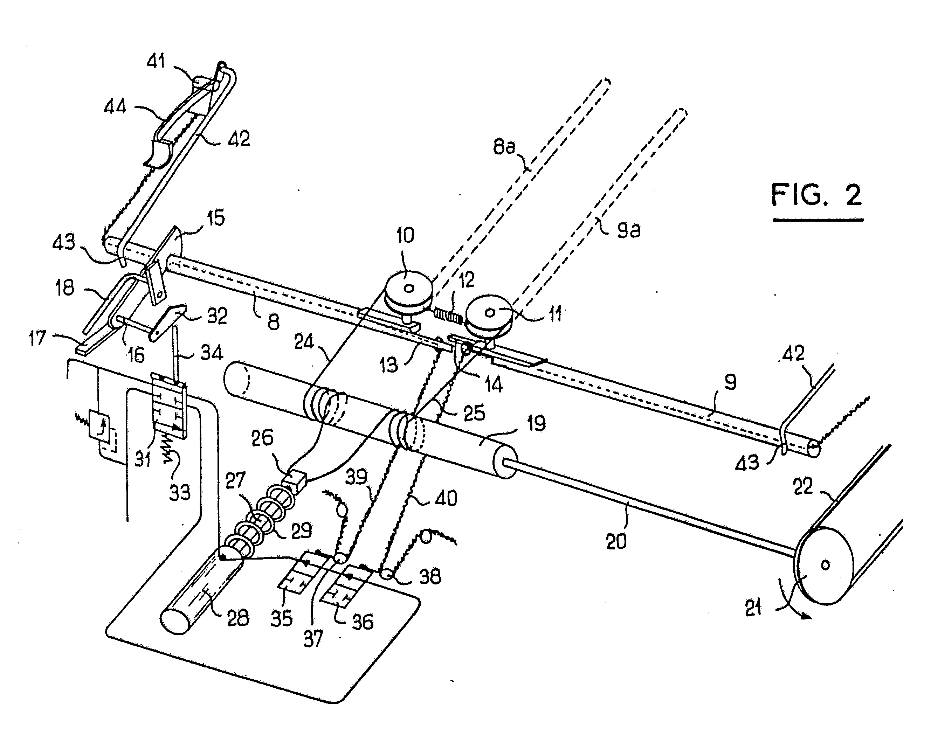

On décrira ci-après le dispositif faisant l'objet de l'invention en regard de la représentation schématique qui forme la fig. 2.

Deux bras guide-ficelle tubulaires 8, 9 sont calés angulairement sur les axes de deux poulies ou roues 10, 11, ces axes étant tourillonnés de façon appropriée dans le corps de la presse. Un ressort est monté entre les deux poulies 10, 11, comme indiqué schématiquement en 12, pour les solliciter angulairement dans un sens tendant à amener les bras 8, 9 de la position représentée en traits pleins à la position représentée en pointillé. Le bras 8 porte en outre une patte 13 dirigée vers l'autre bras 9, qui forme une butée contre laquelle s'applique un talon 14 porté par cet autre bras 9. Ainsi, quand le bras 8 est maintenu dans la position représentée en traits pleins sur la fig. 2, le talon 14 repose contre la patte 13, ce qui maintient également le bras 9 dans cette position illustrée en traits pleins.

Un chrochet de retenue 15 formant verrou est prévu d'un côté de la presse. Son bec maintient normalement le bras 8 dans la position transversale indiquée. Ce crochet 15 est monté à pivotement autour d'un axe 16 et il présente un bras 17 qui peut être actionné manuellement ou automatiquement vers la fin de l'operation de formation de la balle pour déclencher le liage de celle-ci comme décrit plus loin. Cet actionnement automatique peut être assuré, par exemple, en reliant ce bras 17, au moyen d'un câble ou d'une manière analogue, à un levier de déclenchement actionné lui-même par exemple par le rouleau supérieur de la presse quand celui-ci parvient dans une position correspondant à une balle complètement formée. Un ressort indiqué en 18 peut être prévu pour solliciter le crochet 15 vers sa position de verrouillage du bras 8.

Suivant le mode de réalisation représenté, il est prévu un tambour ou rouleau 19 dont l'axe 20 porte une poulie 21 sur laquelle passe une courroie ou analogue 22 passant également sur une poulie 23 calée sur le rouleau 5 de la presse comme montré sur la fig. 1. Ainsi, le tambour 19 est entraîné constamment en rotation quand le rouleau 5 tourne, c'est-à-dire pendant le fonctionnement de la presse.

Des câbles 24, 25 sont fixés par une extrémité sur les poulies 10 et 11 de façon à s'enrouler autour de celles-ci quand les bras 8, 9 passent de la position indiquée en traits pleins à la position indiquée en pointillé. Ces câbles 24, 25 s'enroulent également sur le tambour 19 en formant plusieurs spires comme montré et ils sont reliés par leur autre extrémité à une tête 26 prévue à l'extrémité de la tige de piston 27 d'un cylindre hydraulique 28. Un ressort 29 conjugué à la tige de piston 27 la sollicite normalement vers sa position sortie.

Le cylindre 28 est monté dans un circuit de fluide comprenant un conduit 30 qui s'étend depuis une source de pression qui peut être constituée par le système hydraulique du tracteur jusqu'à un réservoir prévu également sur le tracteur.

Une première valve 31 est intercalée dans ce conduit 30. Cette première valve peut occuper deux positions. Dans l'une de celles-ci, elle permet le passage du fluide sous pression en direction du cylindre 28, afin de provoquer un mouvement de rentrée de la tige de piston 27, tandis que dans son autre position, dans laquelle elle est représentée sur la fig. 2, elle permet l'échappement du fluide à partir du cylindre 28 et ainsi la sortie de la tige de piston 27 sous l'action du ressort 29.

La valve 31 est associée à un levier d'actionnement 32 qui est conjugué lui-même au crochet ou verrou 15 et qui est monté de manière à amener la valve 31 dans sa position d'alimentation du cylindre 28 en fluide quand le crochet 15 est soulevé pour déverrouiller les bras 8, 9. Dans le cas représenté, un ressort 33 sollicite la valve 31 vers cette position de passage, et cette valve porte un poussoir 34 qui coopère avec le levier 32. Quand le crochet 15 est relevé, le levier 32 pivote en s'écartant alors du poussoir 34 et en permettant au ressort 33 d'amener la valve 31 dans sa position de passage du fluide.

Deux autres valves à deux positions 35, 36 sont en outre prévues dans le conduit 30 en amont du cylindre 28. Dans l'une de leurs positions, ces valves permettent le passage du fluide tandis qu'elles sont fermées dans l'autre position. Ces valves sont reliées à des galets 37, 38 sur lesquels passent les deux ficelles de liage 39, 40 et le montage est réalisé de telle sorte que les valves 35, 36 soient amenées dans leur position de passage du fluide quand une traction est exercée sur les galets 37, 38 par les ficelles 39, 40, tandis qu'elles reviennent automatiquement en position de fermeture quand aucune traction ne s'exerce.

Les ficelles 39, 40 s'étendent depuis des boîtes à ficelle prévues sur les côtés de la presse (non représentées), passent sur les galets 37, 38, puis rejoignent les extrémités intérieures des bras tubulaires 8, 9. Elles traversent ensuite ces bras sur leur longueur et leurs extrémités sont retenues par des couteaux 41 (dont un seul est représenté sur la fig. 2), d'une manière en soi connue. Chaque couteau 41 porte une tringle 42 terminée à son extrémité par un bec 43. Dans la position de repos des bras 8, 9 représentés sur la fig. 2, chaque bras agit sur le bec 43 pour exercer une traction sur la tringle 42 et maintenir le couteau 41 en position fermée, tandis qu'un ressort 44 agit normalement pour amener le couteau en position d'ouverture quand la traction exercée sur la tringle 42 cesse.

On décrira maintenant le fonctionnement du dispositif de liage faisant l'objet de l'invention:

Pendant la formation de la balle à l'intérieur de la presse, le dispositif se trouve dans la condition représentée en traits pleins sur la fig. 2. Dans cette condition, les câbles 24, 25 sont détendus, de sorte que le tambour 19, qui tourne constamment du fait de son entraînement à partir du rouleau 5 de la presse, peut tourner librement. La valve 31 se trouve dans la position de mise à l'échappement du cylindre 28 et les valves 35, 36 sont fermées. Les extrémités libres des ficelles 39, 40 sont retenues de la façon connue dans les couteaux fermés 41.

Quand la balle formée à l'intérieur de la presse atteint son diamètre maximum, le bras 17 est actionné, à la main ou de façon automatique, comme indiqué précédemment. Il en résulte que le crochet 15 est soulevé, en libérant ainsi le bras 8. Sous l'effet du ressort 12, ce bras 8 tend à pivoter avec la poulie 10 pour venir occuper la position indiquée en pointillé en 8 a. Au début de ce pivotement, la patte 13 s'écarte du talon 14, de sorte que le bras 9 peut également pivoter avec la poulie 11 pour venir occuper la position 9a. Lors de cette rotation des poulies 10, 11, les câbles 24, 25 s'enroulent sur elles, cet enroulement étant rendu possible par le mou qui existe dans ces câbles entre les poulies et la tête 26.

Lorsque les bras 8, 9 s'écartent des becs 43 des tringles 42, celles-ci sont rappelées en arrière sous l'action des ressorts 44, en permettant l'ouverture des couteaux 41, ce qui libère les parties terminales des ficelles de liage 39, 40.

Quand les bras 8, 9 sont parvenus dans la position 8a, 9a, les extrémités des ficelles 39, 40 pendent alors vers le bas et peuvent être reprises et entraînées par les produits de récolte pénétrant dans la presse en vue du liage, comme indiqué ci-après.

Le pivotement du crochet 15 fait également pivoter par son axe 16 le levier 32, de sorte que la valve 31 peut parvenir dans sa position de passage du fluide. Toutefois, celui-ci est encore empêché d'atteindre le cylindre 28 par les valves 35, 36.

Quand les extrémités des ficelles 39, 40 sont entraînées par les produits de récolte, de sorte qu'une traction est exercée sur elles par la balle tournant entre les bandes ou courrouies de la presse, cette traction, transmise par les ficelles aux galets 37, 38, déplace les valves 35, 36 qui sont ainsi amenées en position d'ouverture. Le fluide parvient alors au cylindre 28 et la tige de piston 27 est déplacée en antagonisme à l'action du ressort 29. La tête 26 tend ainsi les câbles 24, 25, ce qui provoque le resserrement des spires de ces câbles autour du tambour 19 et en conséquence un effet d'embrayage.

Le tambour agit alors pour provoquer, par l'intermédiaire des câbles 24 et 25, la rotation des poulies 10 et 11 dans un sens tendant à ramener les bras 8, 9 vers leur position indiquée en traits pleins sur la fig. 2.

Au cours de ce mouvement, les extrémités des bras 8, 9 décrivent une trajectoire correspondant à un balayage transversal, depuis le milieu de la balle vers ses extrémités, en réalisant le liage de la manière requise.

Quand les bras 8, 9 se rapprochent de la position indiquée en traits pleins sur la fig. 2, les ficelles 39, 40 parviennent en face des couteaux 41. Vers la fin de leur déplacement, les bras 8, 9 agissent sur les becs 43 des tringles 42 pour refermer les couteaux 41. Les ficelles sont ainsi sectionnées et leurs extrémités sont retenues par ces couteaux.

De façon sensiblement simultanée, le bras 8 repousse la tige 18 qui désolidarise le crochet 15 du dispositif de déclenchement, et ce crochet 15 est réengagé derrière le bras. La condition de repos est alors atteinte à nouveau.

Dans cette condition, le levier 32 ramène la valve 31 en position de fermeture, et du fait qu'aucune traction n'est plus exercée sur les ficelles 39, 40, les valves 35, 36 reviennent également dans leur position de fermeture. Le réarmement du dispositif de déclenchement s'effectue lorsque la balle est évacuée.

On comprend que le liage peut, grâce à l'invention, être assuré en un laps de temps qui est sensiblement réduit de moitié par rapport à ce qui est le cas lors de l'utilisation d'un seul bras.

Le dispositif que montre la fig. 1 est analogue à celui visible sur la fig. 2 et les éléments correspondants ont été désignés par les mêmes références. Cette figure montre la disposition possible de ces différents éléments sur la presse à balles cylindriques.

Des modifications peuvent être apportées au mode de réalisation décrit, dans le domaine des équivalences techniques, sans s'écarter de l'invention.

L'invention concerne également les presses à balles cylindriques équipées d'un dispositif tel que décrit ci-avant.

## Revendications

1. Dispositif de liage pour presses à balles cylindriques comprenant deux bras jumelés (8, 9) montés de façon pivotante sur la presse et décrivant par leur extrémité libre , lors de leur mouvement de pivotement, des trajectoires orientées, transversalement à la presse, pour le guidage de la ficelle de liage en face de l'orifice d'entrée des produits de récolte, lesdits bras étant portés par des roues (10, 11) dont le centre constitue le point de pivotement des bras, des moyens (15) retenant ces bras (8, 9) dans leur position de repos, des moyens élastiques (12) pour amener lesdits bras dans une position de départ par un déplacement rapide, et des éléments d'actionnement (24, 25) reliés à ces roues pour provoquer leur rotation de leur position de depart à leur position de repos et déplacer les bras guide-ficelle (8, 9), caractérisé en ce que ces éléments d'actionnement (24, 25) sont constitués par au moins un câble (24, 25) relié, d'une part, à l'une au moins des roues ou poulies (10, 11) portant les bras guide-ficelle (8, 9) et, d'autre part, à un organe de traction (26), en ce qu'il est prévu un tambour (19) relié cinématiquement à un moyen d'entraînement (20, 23) assurant sa rotation continue, ledit câble étant sur son trajet sur mentionné enroulé autour de ce tambour, et en ce que des moyens (27, 28) sont prévus pour provoquer le déplacement de cet organe de traction (26) au début de l'opération de liage, pour resserrer les spires de câble autour du tambour en provoquant un effet d'embrayage, afin d'assurer par le tambour (19) le déplacement positif des bras par l'intermédiaire des roues ou poulies.

2. Dispositif de liage suivant la revendication 1, caractérisé en ce qu'il est prévu un câble (24, 25) pour chacune des roues ou poulies (10, 11).

3. Dispositif de liage suivant la revendication 1 ou 2, caractérisé en ce que l'organe de traction (26) est relié à un cylindre (28) dont l'extrémité libre de la tige de piston porte cet organe de traction (26), ce cylindre étant monté dans un circuit d'alimentation en fluide sous pression (30).

4. Dispositif de liage suivant l'une quelconque des revendications précédentes, caractérisé en ce que des verrous (15) en forme de crochets sont prévus pour retenir les bras (8, 9) en position de repos.

5. Dispositif de liage suivant la revendication 3, caractérisé en ce qu'une valve (31) d'alimentation du cylindre (28) est prévue dans ce circuit (30), des moyens (32, 34) reliant cette valve au verrou (15) de retenue des bras (8, 9) en position de repos, pour l'amener en position d'alimentation du cylindre (28) lorsque les bras sont déverrouillés.

6. Dispositif de liage suivant la revendication 5, caractérisé en ce qu'il est prévu, dans le circuit d'alimentation du cylindre (28), au moins une autre valve (35, 36) à deux positions, maintenue normalement dans une condition de fermeture, cette valve portant au moins un élément (37,38) de guidage d'au moins une ficelle de liage (39, 40) et pouvant être amenée en position d'ouverture sous l'effet de la traction exercée par cette ou ces ficelles lorsque celles-ci sont appelées par la balle pour l'opération de liage.

7. Dispositif de liage suivant l'une quelconque des revendications précédentes, comprenant pour chacune des deux ficelles de liage un couteau maintenu normalement dans une condition d'ouverture, caractérisé en ce qu'il est prévu pour chaque couteau (41) une tringle (42) ou un élément analogue qui est attaqué par les bras (8, 9) lorsque ceux-ci parviennent dans leur condition de repos, afin de provoquer la fermeture des couteaux pour le sectionnement et la rétention des ficelles (39, 40).

8. Dispositif de liage suivant l'une quelconque des revendications 1 à 3 et 5 à 7 dans lequel les bras sont montés à pivotement sur la presse au voisinage de son axe longitudinal, caractérisé en ce qu'il est prévu un verrou (15) en forme de crochet pour retenir l'un des bras (8) en position de repos, des éléments de retenue par butée (13, 14) étant prévus entre les deux bras (8, 9) pour s'opposer au pivotement du second bras (9) quand le premier (8) est maintenu en position verrouillée par ce verrou (15) en forme de crochet.

9. Dispositif de liage suivant la revendication 7 ou 8, caractérisé en ce que ce ou ces verrous (15) en forme de crochets est ou sont reliés à un élément ou comportent un élément (17) pouvant être actionné de façon automatique ou manuelle vers la fin de l'opération de formation de la balle dans la presse pour déverrouiller les bras guide-ficelle (8, 9).

10. Presses à balles cylindriques caractérisées en ce qu'elles comportent un dispositif de liage suivant l'une quelconque des revendications précédentes.

## Patentansprüche

1. Bindevorrichtung für Pressen von zylindrischen Ballen, welche zwei paarweise angeordnete Arme (8, 9) umfaßt, welche schwenkbar auf der Presse montiert sind und mit ihren freien Enden während ihrer Schwenkbewegung quer zur Presse orientierte Bahnen beschreiben, und zwar zur Führung des Bindegarns vor der Eintrittsöffnung der Ernteprodukte, wobei die genannten Arme durch Räder (10, 11) getragen werden, deren Mitte den Schwenkpunkt der Arme bildet, mit Mitteln (15), um die Arme (8, 9) in ihrer Ruhestellung zurückzuhalten, mit elastischen Mitteln (12), um die genannten Arme in eine Startstellung durch eine rasche Verstellung zu bringen, und mit Betätigungselementen (24, 25), welche mit den Rädern zur Hervorrufung von deren Drehung aus ihrer Startstellung in ihre Ruhestellung verbunden sind, und um die Garnführungsarme (8, 9) zu verstellen, dadurch gekennzeichnet, daß diese Betätigungselemente (24, 25) durch wenigstens ein Seil (24, 25) gebildet sind, das einerseits mit wenigstens einem der Räder oder Scheiben (10, 11), welche die Garnführungsarme (8, 9) tragen, und andererseits mit einem Zugorgan (26) verbunden ist, und daß eine Trommel (19) vorgesehen ist, die kinematisch mit einem Antriebsmittel (20, 23) verbunden ist, welches deren kontinuierliche Rotation sicherstellt, wobei das genannte Seil auf seiner oben erwähnten Bahn auf die Trommel aufgewickelt wird, und daß Mittel (27, 28) vorgesehen sind, um eine Verstellung dieses Zugorgans (26) bei Beginn des Bindevorganges hervorzurufen, um die Wicklungen des Seiles um die Trommel unter Hervorrufung einer Kupplungswirkung festzuspannen, um über die Trommel (19) die positive Verstellung der Arme mit Hilfe der Räder oder Scheiben sicherzustellen.

2. Bindevorrichtung nach Anspruch 1, dadurch gekennzeichnet, daß ein Seil (24, 25) für jedes der Räder oder Scheiben (10, 11) vorgesehen ist.

3. Bindevorrichtung nach Anspruch 1 oder 2, dadurch gekennzeichnet, daß das Zugorgan (26) mit einem Zylinder (28) verbunden ist, dessen freies Ende der Kolbenstange dieses Zugorgan (26) trägt, wobei der Zylinder in einen Druckflüssigkeits-Speisekreis (30) montiert ist.

4. Bindevorrichtung nach irgendeinem der voranstehenden Ansprüche, dadurch gekennzeichnet, daß Sperrelemente (15) in Form von Haken vorgesehen sind, um die Arme (8, 9) in der Ruhestellung zu halten.

5. Bindevorrichtung nach Anspruch 3, dadurch gekennzeichnet, daß ein Ventil (31) zur Speisung des Zylinders (28) in dem Kreis (30) vorgesehen ist, sowie Mittel (32, 34) welche das Ventil mit dem Sperrelement (15) zum Halten der Arme (8, 9) in der Ruhestellung verbinden, um es in die Speisestellung für den Zylinder (28) zu bringen, wenn die Arme entriegelt sind.

6. Bindevorrichtung nach Anspruch 5, dadurch gekennzeichnet, daß in dem Speisekreis des Zylinders (28) wenigstens ein weiteres Ventil (35, 36) mit zwei Stellungen vorgesehen ist, welches normalerweise in einer geschlossenen Stellung gehalten ist, wobei dieses Ventil wenigstens ein Element (37, 38) zur Führung wenigstens eines Bindegarnes (39, 40) trägt und in eine Offenstellung unter der Zugwirkung gebracht werden kann, die durch diesen oder die Garne ausgeübt wird, wenn diese durch den Ballen für den Bindevorgang gezogen werden.

7. Bindevorrichtung nach irgendeinem der voranstehenden Ansprüche, welche für jedes der beiden Bindegarne ein Messer umfaßt, das normalerweise in einem Offenzustand gehalten wird, dadurch gekennzeichnet, daß für jedes Messer (41) eine Stange (42) oder ein analoges Element vorgesehen ist, das von den Armen (8, 9) beaufschlagt wird, wenn diese in ihre Ruhestellung gelangen, um ein Schließen der Messer zum Abtrennen und Zurückhalten der Garne (39, 40) hervorzurufen.

8. Bindevorrichtung nach irgendeinem der voranstehenden Ansprüche 1 bis 2 und 5 bis 7, bei der die Arme schwenkbar auf der Prese nahe ihrer Längsachse montiert sind, dadurch gekennzeichnet, daß ein Sperrelement (15) in Form eines Hakens zum Zurückhalten eines der Arme (8) in der Ruhestellung vorgesehen ist, wobei Halteelemente durch Anschläge (13, 14) zwischen den beiden Armen (8, 9) vorgesehen sind, um sich einer Schwenkbewegung des zweiten Armes (9) entgegenzustellen, während der erste (8) in der verriegelten Stellung durch das Sperrelement (15) in Form eines Hakens gehalten wird.

9. Bindevorrichtung nach Anspruch 7 oder 8, dadurch gekennzeichnet, daß das oder die Sperrelemente (15) in Form von Haken mit einem Element verbunden sind oder ein Element (17) tragen, welches automatisch oder mittels Hand am Ende des Bildungsvorganges des Ballens in der Presse betätigt werden kann, um die Garnführungsarme (8, 9) zu entriegeln.

10. Presse für zylindrische Ballen, dadurch gekennzeichnet, daß sie eine Bindevorrichtung nach irgendeinem der voranstehenden Ansprüche umfaßt.

**Claims**

1. A binding apparatus for cylindrical bale presses comprising two arms (8, 9) which are arranged in paired relationship and which are mounted pivotally on the press and which, by means of their free ends, during their pivotal movement, describe paths of movement which are directed transversely with respect to the press, for guiding the binding twine in front of the crop product intake aperture, said arms being carried by wheels (10, 11), the centre of which constitutes the pivot point of the arms, means (15) retaining said arms (8, 9) in their rest position, resilient means (12) for moving said arms into a starting position by a rapid movement, and actuating elements (24, 25) connected to said wheels to cause them to rotate from their starting position to their rest position and to displace the twine guide arms (8, 9), characterised in that said actuating elements (24, 25) comprise at least one cable (24, 25) which is connected on the one hand to one at least of the wheels or pulleys (10, 11) carrying the twine guide arms (8, 9) and on the other hand to a traction member (26), that there is provided a drum (19) which is kinematically connected to a drive means (20, 23) for producing continuous rotation thereof, said cable being wound on its above-mentioned path around said drum, and that means (27, 28) are provided for causing displacement of said traction member (26) at the beginning of the binding operation to tighten the turns of cable around the drum, causing a coupling effect in order to ensure positive displacement of the arms by the drum (19), by way of the wheels or pulleys.

2. A binding apparatus according to claim 1, caracterised in that a cable (24, 25) is provided for each of the wheels or pulleys (10, 11).

3. A binding apparatus according to claim 1 or claim 2, characterised in that the traction member (26) is connected to a cylinder (28), the free end of the piston rod of which carries said traction member (26), said cylinder being disposed in a pressurised fluid supply circuit (30).

4. A binding apparatus according to any one of the preceding claims characterised in that lock members (15) in the form of latch members are provided to retain the arms (8, 9) in the rest position.

5. A binding apparatus according to claim 3, characterised in that a valve (31) for supplying the cylinder (28) is provided in said circuit (30), means (32, 34) connecting said valve to the lock member (15) for retaining the arms (8, 9) in the rest position to move it into the position of supplying said cylinder (28) when the arms are unlocked.

6. A binding apparatus according to claim 5, characterised in that at least on other two-position valve (35, 36) is provided in the circuit for supplying the cylinder (28), said valve (35, 36) normally being held in a closed position and carrying at least one element (37, 38) for guiding at least one binding twine (39, 40) and being capable of being moved into an open position under the effect of the pulling force applied by said twine or twines when same are drawn by the bale for the binding operation.

7. A binding apparatus according to any one of the preceding claims comprising, for each of the two binding twines, a knife which is normally held in an open condition, characterised in that for each knife (41) there is provided a rod (42) or a similar element which is engaged by the arms (8, 9) when the latter move into their rest condition in order to cause closure of the knives for cutting and retaining the twines (39, 40).

8. A binding apparatus according to any one of claims 1 to 2 and 5 to 7, wherein the arms are mounted pivotally on the press in the vicinity of the longitudinal axis thereof, characterised in that there is provided a lock member (15) in the form of a latch member for retaining one of the arms (8) in a rest position, retaining elements (13, 14) which operate by an abutment action being provided between the two arms (8, 9) to resist pivotal movement of the second arm (9) when the first arm (8) is held in the locked position by said latching lock member (15).

9. A binding apparatus according to claim 7 or claim 8, characterised in that said lock member or members (15) in the form of latch members is or are connected to an element or comprise an element (17) which is capable of being automatically or manually actuated towards the end of the operation of forming the bale in the press, to unlock the twine guide arms (8, 9).

10. Cylindrical bale presses characterised in that they comprise a binding apparatus according to any one of the preceding claims.

**FIG. 1**

**FIG. 2**